# EUROPÄISCHE PATENTSCHRIFT

(11) **EP 1 861 287 B1**
(45) Veröffentlichungstag und Bekanntmachung des Hinweises auf die Patenterteilung: **11.05.2011**
(21) Anmeldenummer: 06722596.1
(22) Anmeldetag: 10.03.2006
(51) Int. Cl.: B60R 5/04

(54) **LADERAUMANORDNUNG**
LOADING SPACE ARRANGEMENT
ENSEMBLE COMPARTIMENT DE CHARGEMENT

(30) Priorität: 11.03.2005 DE 102005011681
(43) Veröffentlichungstag der Anmeldung: 05.12.2007
(73) Patentinhaber: Webasto AG, 82131 Stockdorf (DE)
(72) Erfinder: LEROY, Alain, 86911 Diessen-Dettenschwang (DE); PSCHORN, Heinz, 85221 Dachau (DE); BRAUN, Robert, 82335 Berg (DE); LEGLER, Dirk, 86947 Weil (DE); KOELBL, Michael, 82061 Neuried (DE); VOGT, Oliver, 80796 München (DE); RUDOLPH, Thomas, 82229 Hechendorf (DE); JAKIMENCZUK, Thomas, 85635 Höhenkirchen (DE)
(74) Vertreter: advotec.
(86) Internationale Anmeldenummer: PCT/DE2006/000439
(87) Internationale Veröffentlichungsnummer: WO 2006/094498

(56) Entgegenhaltungen:
- FR-A- 2 745 771
- FR-A- 2 796 033
- US-A- 3 004 790
- US-A- 3 082 033
- US-A1- 2002 000 732

## Beschreibung

Die vorliegende Erfindung betrifft eine Laderaumanordnung für ein Kraftfahrzeug nach dem Oberbegriff des Anspruchs 1.

Eine Laderaumanordnung der eingangs genannten Art ist aus der US 3 082 033 bekannt. Diese Laderaumanordnung umfasst einen Laderaum mit einer Ladefläche und einer Laderaumklappe, die um eine im Wesentlichen horizontale Achse schwenkbar ist und an ihrer Innenseite eine Auflagefläche hat. Die Ladefläche und die Auflagefläche der Laderaumklappe liegen in einer Ladeposition in einer Ebene. Des Weiteren umfasst die Laderaumanordnung einen kastenförmigen Aufbau, der in der Ladeposition der Laderaumklappe lösbar an dieser befestigt werden kann.

Aus der US 2002/0000732 A1 ist eine Laderaumerweiterung für ein als so genannter Pick-up ausgebildetes Kraftfahrzeug bekannt. Diese Laderaumerweiterung ist kastenförmig ausgebildet und steht auf einer heckseitigen Ladeklappe für eine Ladefläche des Kraftfahrzeuges auf. Die Laderaumerweiterung ist klappbar ausgebildet.

Der vorliegenden Erfindung liegt die Aufgabe zugrunde, eine Laderaumanordnung vorzuschlagen, bei der der Stauraum gegenüber dem Stand der Technik mit einer erleichterten Lade- bzw. Entlademöglichkeit versehen ist.

Diese Aufgabe ist durch die Laderaumanordnung mit den Merkmalen des Anspruchs 1 gelöst Die Unteransprüche betreffen vorteilhafte Weiterbildungen der Erfindung.

Erfindungsgemäß wird also eine Transportplattform vorgeschlagen, die vom Innenraum der Transportvorrichtung in den Laderaum überführbar ist. Diese Transportplattform erleichtert das Be- beziehungsweise Entladen der hier vorgestellten Laderaumanordnung. Der Benutzer kann das zu transportierende Ladegut sehr einfach auf der verfahrbaren Transportplattform ablegen und anschließend gegebenenfalls in den Laderaum des Fahrzeugs überführen. Der dann im Innenraum der Transportvorrichtung verbleibende Platz kann für zusätzliches Ladegut genutzt werden. Zum Entladen kann die Transportplattform wieder aus dem Laderaum des Fahrzeugs in den Innenraum der Transportvorrichtung überführt werden, damit das auf der Transportplattform abgelegte Ladegut wieder von der Transportplattform entfernt werden kann.

In einer vorteilhaften Ausführungsform weist die Transportvorrichtung mindestens ein Deckelelement auf, geeignet, einen Innenraum der Transportvorrichtung freizugeben und wieder zu verschließen. Mit Hilfe des mindestens einen Deckelelements kann der Innenraum der Transportvorrichtung sehr einfach freigegeben und wieder verschlossen werden. Durch Öffnen des Deckelements kann der Benutzer somit sehr einfach den Innenraum der Transportvorrichtung erreichen, um das zu transportierende Ladegut in der Transportvorrichtung unterzubringen beziehungsweise wieder aus dieser zu entnehmen. Das mindestens eine Deckelelement kann ferner das Eindringen von Nässe in den Innenraum der Transportvorrichtung wirksam verhindern.

Gemäß einer bevorzugten Weiterbildung weist die Transportvorrichtung eine Rückwand auf, die um eine horizontale Achse oder um eine vertikale Achse schwenkbar ist. Die schwenkbare Rückwand bietet dem Benutzer eine zusätzliche oder alternative Möglichkeit, den Innenraum der Transportvorrichtung und/oder den Laderaum des Kraftfahrzeugs zu erreichen.

Es kann in einer vorteilhaften Ausführungsform vorgesehen sein, dass die Rückwand mindestens ein schwenkbares Klappenelement aufweist. Das vorzugsweise um eine im Wesentlichen horizontale Achse schwenkbare Klappenelement, ermöglicht es, dass beispielsweise Langgüter, die über die Rückwand der Transportvorrichtung hinausragen, mit Hilfe der Laderaumanordnung transportiert werden können. Der Benutzer kann das mindestens eine Klappenelement schwenken und durch die sich bildende Öffnung das zu transportierende Langgut hindurchführen und in der Laderaumanordnung verstauen.

Vorzugsweise weist die Laderaumanordnung Führungsmittel auf, in denen die Transportplattform aufgenommen ist. Beispielsweise können Kombinationen aus Schienen und Rollen sowie andere vergleichbare Führungsmittel eingesetzt werden, die so eingerichtet sind, dass eine Überführung der Transportplattform vom Innenraum der Transportvorrichtung in den Laderaum des Fahrzeugs und umgekehrt sehr einfach möglich ist.

In einer bevorzugten Ausführungsform weist die Transportplattform mindestens zwei Begrenzungswände auf, geeignet, die Transportpiattform seitlich zu begrenzen. Die beiden gegenüberliegend angeordneten Begrenzüngswände dienen unter anderem der Erhöhung der Stabilität und können ferner ein seitliches Herabfallen des Ladeguts von der Transportplattform verhindern.

In einer besonders vorteilhaften Ausführungsform wird vorgeschlagen, dass die Transportplattform mindestens eine erste Stirnwand aufweist, geeignet, den Laderaum des Kraftfahrzeugs zu verschließen, wenn die Transportplattform in den Laderaum überführt ist. Die erste Stirnwand kann als Schottwand wirken und dadurch den Laderaum und damit auch den Innenraum des Fahrzeugs abdichten, so dass das Fahrzeug auch mit der Transportvorrichtung, die an der Aufnahmefläche der Laderaumklappe angebracht ist, gefahren werden kann, ohne dass währenddessen schädliche Abgase in den Laderaum beziehungsweise Fahrzeuginnenraum eindringen können.

In einer vorteilhaften Ausführungsform kann vorgesehen sein, dass die Transportplattform mindestens eine zweite Stirnwand aufweist, die der ersten Stirnwand gegenüberliegt. Zusammen mit der ersten Stirnwand sowie den beiden seitlichen Begrenzungswänden wird auf der Transportplattform ein zu allen Seiten begrenzter Transportraum zur Verfügung gestellt, so dass darin beispielsweise auch lose Füllgute sowie gegebenenfalls auch Flüssigkeiten transportiert werden können.

Um zu verhindern, dass sich die Transportplattform beispielsweise während der Fahrt ungewollt hin und her bewegt kann die Laderaumanordnung in einer besonders bevorzugten Ausführungsform Arretierungsmittel aufweisen, geeignet, die Transportplattform in einer gewünschten Position verschiebesicher zu arretieren.

Neben der extrem hohen Variabilität, welche die erfindungsgemäße Laderaumanordnung liefert, ist ein weiterer Vorteil der vorliegenden Erfindung darin zu sehen, dass der Stauraum des Kraftfahrzeugs auf einfache Weise erheblich vergrößert werden kann. Ein Herabfallen des Ladeguts beim Bebeziehungsweise Entladen kann effektiv verhindert werden.

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigen
- Fig. 1: eine perspektivische Ansicht einer erfindungsgemäßen Ladeanordnung für ein Kraftfahrzeug in einer ersten Betriebsposition;
- Fig. 2: eine perspektivische Ansicht der Laderaumanordnung für ein Kraftfahrzeug gemäß Fig. 1 in einer zweiten Betriebsposition.

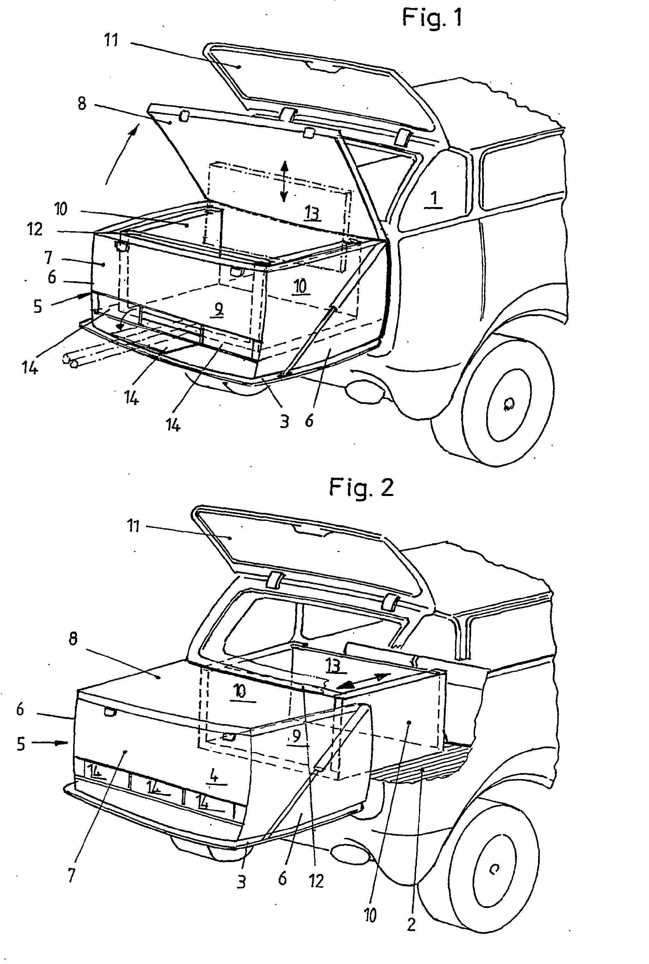

Eine erfindungsgemäße Laderaumanordnung für ein Kraftfahrzeug ist in Fig. 1 und Fig. 2 perspektivisch in zwei unterschiedlichen Betriebspositionen gezeigt.

Die Laderaumanordnung weist einen Laderaum 1 mit einer Ladefläche 2 im Inneren eines Kraftfahrzeugs, eine um eine im Wesentlichen horizontale Drehachse schwenkbare Laderaumklappe 3, die eine Aufnahmefläche 4 umfasst, sowie eine im Wesentlichen kastenförmig ausgebildete Transportvorrichtung 5 auf, die in diesem Ausführungsbeispiel auf einer dem Laderaum 1 des Kraftfahrzeugs zugewandten Seite offen ist.

In einer Ladeposition, die durch ein Verschwenken der Laderaumklappe 3 in eine im Wesentlichen horizontale Position erhalten wird, liegen die Ladefläche 2 des Laderaums 1 sowie die Aufnahmefläche 4 der Laderaumklappe 3 im Wesentlichen in einer Ebene. In der soeben beschriebenen Ladeposition kann die im Wesentlichen kastenförmig ausgebildete Transportvorrichtung 5, welche Mittel zur lösbaren Anbringung an der Aufnahmefläche 4 umfasst, lösbar an der Aufnahmefläche 4 der Laderaumklappe 3 angebracht werden.

Die Transportvorrichtung 5 weist in diesem Ausführungsbeispiel zwei Seitenwände 6, eine Rückwand 7 sowie ein Deckelelement 8 auf, die einen Innenraum der Transportvorrichtung 5 nach außen begrenzen. Das Deckelelement 8 ist in diesem Ausführungsbeispiel mit Hilfe von Scharniermitteln schwenkbar an der Transportvorrichtung 5 angelenkt und kann somit bei Bedarf von einem Benutzer geöffnet und wieder verschlossen werden, damit der Innenraum der Transportvorrichtung 5 erreicht werden kann.

Die Rückwand 7 der Transportvorrichtung 5 kann vorzugsweise ebenfalls um eine horizontale oder um eine vertikale Achse schwenkbar ausgeführt sein, damit der Innenraum der Transportvorrichtung 5 erreicht werden kann.

In diesem Ausführungsbeispiel weist die Rückwand 7 darüber hinaus schwenkbare Klappenelemente 14 auf, so dass bei Bedarf mit Hilfe der hier vorgestellten Laderaumanordnung auch Langgüter, wie in Fig. 1 angedeutet, transportiert werden können, ohne dass die Rückwand 7 verschwenkt werden muss.

Man erkennt ferner, dass das Kraftfahrzeug in diesem Ausführungsbeispiel eine Heckscheibe 11 aufweist, die vom Benutzer geöffnet beziehungsweise geschlossen werden kann. In der Öffnungsposition der Heckscheibe 11, die in Fig. 1 und Fig. 2 gezeigt ist, hat der Benutzer Zugriff auf den Laderaum 1 des Fahrzeugs, um beispielsweise durch die sich dann ergebende Heckscheibenöffnung Transportgut in den Laderaum 1 zu verbringen oder wieder aus diesem zu entnehmen.

Die Laderaumanordnung umfasst ferner eine verfahrbare Transportplattform 9, die vom Innenraum der Transportvorrichtung 5 auf die Ladefläche 2 des Laderaums 1 des Kraftfahrzeugs überführt werden kann. Somit kann der Benutzer beispielsweise bei geöffnetem Deckelelement 8 oder bei geöffneter Rückwand 7 das zu transportierende Ladegut auf der verfahrbaren Transportplattform 9 ablegen und dann in den Laderaum 1 des Kraftfahrzeugs überführen. Diese zweite Betriebsposition, in der sich die Transportplattform 9 im Laderaum 1 des Kraftfahrzeugs befindet, ist in Fig. 2 perspektivisch dargestellt. Vorzugsweise weist die Laderaumanordnung Führungsmittel auf, in denen die Transportplattform 9 aufgenommen ist. Beispielsweise können Kombinationen aus Schienen und Rollen sowie andere vergleichbare Führungsmittel eingesetzt werden, die so eingerichtet sind, dass eine Überführung der Transportplattform 9 vom Innenraum der Transportvorrichtung 5 in den Laderaum 1 des Fahrzeugs und umgekehrt möglich ist.

An der Transportplattform 9 sind Begrenzungswände 10 angebracht, welche die Transportplattform 9 seitlich begrenzen, um die Stabilität erhöhen und ein seitliches Herabfallen des Ladeguts von der Transportplattform 9 zu verhindern. Um zu vermeiden, dass sich die Transportplattform 9 insbesondere während der Fahrt ungewollt bewegen kann, sind Arretierungsmittel vorgesehen, die hier nicht explizit dargestellt sind. Diese Arretierungsmittel sind so eingerichtet, dass sie die Transportplattform 9 verschiebesicher in einer gewünschten Position, beispielsweise im Innenraum der Transportvorrichtung 5 oder im Laderaum 1 halten können.

Vorzugsweise ist an der Transportplattform 9 zusätzlich zu den beiden Begrenzungswänden 10 mindestens eine erste Stirnwand 12 vorgesehen. Die erste Stirnwand 12 ist so eingerichtet, dass sie den Laderaum 1 des Fahrzeugs und damit auch den übrigen Fahrzeuginnenraum abdichten und damit das Eindringen von Abgasen verhindern kann, wenn sich die Transportplattform 9 in der zweiten Betriebsposition, die in Fig. 2 gezeigt ist, im Laderaum 1 des Fahrzeugs befindet. Das Kraftfahrzeug kann dann auch mit der auf der Aufnahmefläche 4 der Laderaumklappe 3 aufgesetzten Transportvorrichtung 5 gefahren werden.

Vorzugsweise ist an der Transportplattform 9 eine zweite Stirnwand 13 angebracht, die der ersten Stirnwand 12 gegenüberliegt. Die Transportplattform 9 bildet dann mit den beiden Begrenzungswänden 10 sowie der ersten Stirnwand 12 und der zweiten Stirnwand 13 einen zu allen Seiten begrenzten Aufnahmeraum, so dass beispielsweise auch loses Füllgut oder auch Flüssigkeiten transportiert werden können. Gegebenenfalls kann die Transportplattform 9 ebenfalls ein Deckelelement aufweisen. Die zweite Stirnwand 13 kann auch so eingerichtet sein, dass sie den Laderaum 1 des Fahrzeugs und damit auch den übrigen Fahrzeuginnenraum abdichten und damit das Eindringen von Abgasen verhindern kann, wenn sich die Transportplattform 9 in der in Fig. 1 gezeigten ersten Betriebsposition im Innenraum der Transportvorrichtung 5 befindet. Zur Erhöhung der Flexibilität können die Stirnwände 12, 13 und/oder die Begrenzungswände 10 lösbar an der Transportplattform 9 angebracht sein.

Mit Hilfe der hier gezeigten Laderaumanordnung kann der Stauraum, der dem Kraftfahrzeug zur Verfügung steht, auf einfache Weise erheblich vergrößert werden. Die Laderaumanordnung ist so ausgebildet, dass insbesondere auch ein Fahren mit abgeklappter Laderaumklappe 4 mit aufgesetzter Transportvorrichtung 5 möglich ist, ohne dass schädliche Abgase in den Laderaum 1 und den Fahrzeuginnenraum eindringen können.

Ein weiterer Vorteil der Laderaumanordnung besteht darin, dass sie sehr variabel und damit flexibel und vielseitig einsetzbar ist.

### Bezugszeichenliste

- 1: Laderaum
- 2: Ladefläche
- 3: Laderaumklappe
- 4: Aufnahmefläche
- 5: Transportvorrichtung
- 6: Seitenwand
- 7: Rückwand
- 8: Deckelelement
- 9: Transportplattform
- 10: Begrenzungswand
- 11: Heckscheibe
- 12: erste Stirnwand
- 13: zweite Stirnwand
- 14: Klappenelement

## Patentansprüche

1. Laderaumanordnung für ein Kraftfahrzeug, umfassend:
- einen Laderaum (1), der eine Ladefläche (2) aufweist;
- eine um eine im Wesentlichen horizontale Achse schwenkbare Laderaumklappe (3), die eine Aufnahmefläche (4) umfasst, wobei die Ladefläche (2) und die Aufnahmefläche (4) in einer Ladeposition in einer Ebene oder in etwa parallel zueinander orientierten Ebenen angeordnet sind,
- eine im Wesentliche kastenförmige Transportvorrichtung (5), die in der Ladeposition lösbar an der Aufnahmefläche (4) der Laderaumklappe (3) angebracht ist;
**gekennzeichnet durch** eine Transportplattform (9), die vom Innenraum der Transportvorrichtung (5) in den Laderaum (1) überführbar ist.

2. Laderaumanordnung nach Anspruch 1, **dadurch gekennzeichnet, dass** die Transportvorrichtung (5) mindestens ein Deckelelement (8) aufweist, geeignet, einen Innenraum der Transportvorrichtung (5) freizugeben und wieder zu verschließen.

3. Laderaumanordnung nach Anspruch 1 oder 2, **dadurch gekennzeichnet, dass** die Transportvorrichtung (5) eine Rückwand (7) aufweist, die um eine horizontale Achse oder um eine vertikale Achse schwenkbar ist.

4. Laderaumanordnung nach einem der Ansprüche 1 bis 3, **dadurch gekennzeichnet, dass** die Rückwand (7) mindestens ein schwenkbares Klappenelement (14) aufweist.

5. Laderaumanordnung nach einem der Anspruch 1, **dadurch gekennzeichnet, dass** die Laderaumanordnung Führungsmittel aufweist, in denen die Transportpiattform (9) aufgenommen ist.

6. Laderaumanordnung nach Anspruch 1 oder 5, **dadurch gekennzeichnet, dass** die Transportplattform (9) mindestens zwei Begrenzungswände (10) aufweist, geeignet, die Transportplattform (9) seitlich zu begrenzen.

7. Laderaumanordnung nach einem der Ansprüche 1, 5 und 6, **dadurch gekennzeichnet, dass** die Transportplattform (9) mindestens eine erste Stirnwand (12) aufweist, geeignet, den Laderaum (1) des Kraftfahrzeugs zu verschließen, wenn die Transportplattform (9) in den Laderaum (1) überführt ist.

8. Laderaumanordnung nach Anspruch 7, **dadurch gekennzeichnet, dass** die Transportplattform (9) mindestens eine zweite Stirnwand (13) aufweist, die der ersten Stirnwand (12) gegenüberliegt.

9. Laderaumanordnung nach einem der Ansprüche 1 und 6 bis 8, **dadurch gekennzeichnet, dass** die Transportvorrichtung (5) Arretierungsmittel aufweist, geeignet, die Transportplattform (9) in einer gewünschten Position verschiebesicher zu arretieren.

## Claims

1. Loading space arrangement for a motor vehicle, comprising:
- a loading space (1) which has a loading surface (2);
- a loading space flap (3) which is pivotable about a substantially horizontal axis and which comprises a receiving surface (4), the loading surface (2) and the receiving surface (4) being arranged in a plane, or in planes aligned approximately parallel to one another, in a loading position,
- a substantially box-shaped transport device (5) which, in the loading position, is detachably mounted on the receiving surface (4) of the loading space flap (3);
**characterized by** a transport platform (9) which can be moved from the interior of the transport device (5) into the loading space (1).

2. Loading space arrangement according to Claim 1, **characterized in that** the transport device (5) has at least one lid element (8) suitable for opening up and closing off again an interior space of the transport device (5).

3. Loading space arrangement according to Claim 1 or 2, **characterized in that** the transport device (5) has a rear wall (7) which is pivotable about a horizontal axis or about a vertical axis.

4. Loading space arrangement according to one of Claims 1 to 3, **characterized in that** the rear wall (7) has at least one pivotable flap element (14).

5. Loading space arrangement according to Claim 1, **characterized in that** the loading space arrangement has guide means in which the transport platform (9) is held.

6. Loading space arrangement according to Claim 1 or 5, **characterized in that** the transport platform (9) has at least two delimiting walls (10) suitable for delimiting the transport platform (9) at the sides.

7. Loading space arrangement according to one of Claims 1, 5 and 6, **characterized in that** the transport platform (9) has at least one first end wall (12) suitable for closing off the loading space (1) of the motor vehicle when the transport platform (9) is moved into the loading space (1).

8. Loading space arrangement according to Claim 7, **characterized in that** the transport platform (9) has at least one second end wall (13) which is situated opposite the first end wall (12).

9. Loading space arrangement according to one of Claims 1 and 6 to 8, **characterized in that** the transport device (5) has locking means suitable for immovably locking the transport platform (9) in a desired position.

## Revendications

1. Ensemble de compartiment de chargement pour un véhicule automobile, comprenant :
- un compartiment de chargement (1) qui présente une surface de chargement (2) ;
- un volet (3) de compartiment de chargement pouvant pivoter autour d'un axe essentiellement horizontal, qui comprend une surface de réception (4), la surface de chargement (2) et la surface de réception (4) étant disposées dans une position de chargement dans un même plan ou dans des plans orientés approximativement parallèlement l'un à l'autre,
- un dispositif de transport (5) essentiellement en forme de caisse, qui est monté dans la position de chargement de manière amovible sur la surface de réception (4) du volet (3) de compartiment de chargement ;
**caractérisé par** une plate-forme de transport (9), qui peut être transférée de l'espace interne du dispositif de transport (5) dans le compartiment de chargement (1).

2. Ensemble de compartiment de chargement selon la revendication 1, **caractérisé en ce que** le dispositif de transport (5) présente au moins un élément de recouvrement (8) qui est approprié pour libérer un espace interne du dispositif de transport (5) et pour le refermer à nouveau.

3. Ensemble de compartiment de chargement selon la revendication 1 ou 2, **caractérisé en ce que** le dispositif de transport (5) présente une paroi arrière (7) qui peut pivoter autour d'un axe horizontal ou autour d'un axe vertical.

4. Ensemble de compartiment de chargement selon l'une quelconque des revendications 1 à 3, **caractérisé en ce que** la paroi arrière (7) présente au moins un élément de volet pivotant (14).

5. Ensemble de compartiment de chargement selon la revendication 1, **caractérisé en ce que** l'ensemble de compartiment de chargement présente des moyens de guidage dans lesquels est reçue la plate-forme de transport (9).

6. Ensemble de compartiment de chargement selon la revendication 1 ou 5, **caractérisé en ce que** la plate-forme de transport (9) présente au moins deux parois de limitation (10), appropriées pour limiter latéralement la plate-forme de transport (9).

7. Ensemble de compartiment de chargement selon l'une quelconque des revendications 1, 5 et 6, **caractérisé en ce que** la plate-forme de transport (9) présente au moins une première paroi frontale (12) appropriée pour fermer le compartiment de chargement (1) du véhicule automobile, quand la plate-forme de transport (9) est transférée dans le compartiment de chargement (1).

8. Ensemble de compartiment de chargement selon la revendication 7, **caractérisé en ce que** la plate-forme de transport (9) présente au moins une deuxième paroi frontale (13) qui est opposée à la première paroi frontale (12).

9. Ensemble de compartiment de chargement selon l'une quelconque des revendications 1 et 6 à 8, **caractérisé en ce que** le dispositif de transport (5) présente des moyens de blocage appropriés pour bloquer, de manière immobilisée, la plate-forme de transport (9) dans une position souhaitée.
